# EUROPÄISCHE PATENTSCHRIFT

(11) **EP 0 566 830 B1**
(45) Veröffentlichungstag und Bekanntmachung des Hinweises auf die Patenterteilung: **29.04.1998**
(21) Anmeldenummer: 93101704.0
(22) Anmeldetag: 04.02.1993
(51) Int. Cl.: B29B 15/10, B29B 17/00, B29B 7/00, B29C 70/02

(54) **Verfahren und Vorrichtung zum Herstellen einer duroplastischen Pressmasse aus Faser-Harz-Werkstoff, insbesondere einer SMC-Matte (Prepreg)**
Process and apparatus for preparing a fibre/resin composite moulding material, especially a prepreg
Procédé et installation pour la préparation d'une matière à mouler composite fibre/résine, en particulier d'un préimprégné

(30) Priorität: 20.02.1992 DE 4205119
(43) Veröffentlichungstag der Anmeldung: 27.10.1993
(73) Patentinhaber: ERCOM COMPOSITE RECYCLING GmbH KUNSTSTOFFAUFBEREITUNG, D-76437 Rastatt (DE)
(72) Erfinder: Buhl, Dieter, W-6710 Frankenthal (DE); Ehnert, Gerd, W-7529 Forst (DE); Hund, Joachim, Dipl.Ing., W-6731 St.Martin (DE); Schaefer, Peter, Dr., W-7410 Reutlingen (DE); van Voorst, Bastiaan, NL-8071 HC Nunspeet (NL)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 37 860
- EP-A- 135 922
- EP-A- 443 051
- WO-A-92/00177
- DE-A- 1 779 918
- DE-A- 2 165 148
- DE-A- 3 922 740
- US-A- 1 760 374

## Beschreibung

Die Erfindung betrifft ein Verfahren und eine Vorrichtung zum Herstellen einer duroplastischen Preßmasse aus Faser-Harz-Werkstoff, wie insbesondere von SMC-Matten (Prepregs), Premix-Preßmassen (BMC), Spritzgießmassen (ZMC), kontinuierlich imprägnierten Compounds (LIC) oder dergleichen.

Bekanntermaßen werden zur Herstellung von faserverstärkten duroplastischen Preßmassen die Füllstoffe, wie Calciumcarbonat oder Kaolin, mittels eines Rührmischers in die Harzpaste eingerührt. Bei Füllstoffen ist dies in der Regel problemlos. Die Masse kann auch fertigungsbedingt über einen gewissen Zeitraum stehen bleiben und später weiterverarbeitet werden. Probleme ergeben sich aber, wenn die Feststoffe zerkleinertes und damit streufähiges GFK-Recyclat beinhalten, wobei entsprechende Recyclat-Harz-Massen beispielsweise aus der DE-A-39 22 740 oder auch der DE-A-39 37 249 bekannt sind.

Die DE-A-39 22 740 betrifft grundsätzlich einen gattungsgemäßen Gegenstand. Hier werden in einem diskontinuierlichen Vorgehen Kunststoffabfälle in zerkleinerter Form mit härtbaren Kunstharzen versetzt, so daß sich eine Recycling-Kunststoff-Formmasse der dort angegebenen Zusammensetzung ergibt. Ausgangsbestandteile aus ungesättigtem Polyesterharz mit einem Styrolanteil, SMC-Abfällen, Zinkstearat und Butylperbenzoat werden in einem Kneter verarbeitet; wenn nur ein geringer Abfallanteil verwendet wird, können weitere (frische) Kurzglasfasern zugegeben und es kann weitergeknetet werden. Im einen Fall wird das Halbzeug in einer Plattenform zu einer 4 mm dicken Platte verpreßt; in einem anderen Fall in einem Polyethylenbeutel stehengelassen und dann fünf Minuten bei 150° gehärtet. Es werden durch Randbeschneiden von Glasfaser-, Steinwolle- oder Polyurethanharzschaumplatten entstandene Abfälle aus den genannten Materialien verwendet, nicht aber neben Glasfasern vernetzte duroplatische Kunststoffe enthaltendes GFK-Recyclat. Eine Platte soll dadurch hergestellt werden, daß in eine Form eingegebenes Abfallmaterial mit Isocyanat oder Phenolharz besprüht wird und dann der so imprägnierte Abfall verpreßt und erhitzt wird, um die entsprechende Platte zu erhalten.

Aufgrund unterschiedlicher Recyclat-Qualität, insbesondere unterschiedlicher Oberflächen der Recyclatpartikel ergeben sich verschieden hohe Viskositätsniveaus, da Lösungsmittel und Harz in Mikrorisse des Recyclats, das in der Regel mittels Hammermühlen zerkleinert wurde, eindringen kann, wodurch bevorzugt ein Abzug von Flüssigsubstanz aus der Harzpaste und damit ein physikalisches Eindicken der Mischung bewirkt wird. Es ergeben sich also Viskositätsunterschiede und -veränderungen, die Festigkeitsprobleme bewirken können. Jede Viskositätserhöhung muß durch zusätzliche Energieeinwirkung, wie erhöhten Druck, in der Imprägnierstrecke der SMC-Anlage kompensiert werden, um eine gute Imprägnierung der Glasfasern zu erreichen. Weiterhin sind derartige Viskositätssteigerungen je nach Recyclat-Qualität und Standzeit des Ansatzes zwischen Rührvorgang und Weiterverarbeitung in ihrer Größe nicht kontrollierbar.

Der Erfindung liegt die Aufgabe zugrunde, ein Verfahren und eine Vorrichtung zu schaffen, mit denen die oben genannten Nachteile vermieden und eine optimal homogene duroplastische Faser-Harz-Werkstoffmasse herstellbar ist.

Erfindungsgemäß wird die genannte Aufgabe durch ein Verfahren des Anspruchs 1 sowie eine Vorrichtung des Anspruchs 7 gelöst.

Es wurde ein Verfahren und eine Vorrichtung entwickelt, bei denen durch das kontinuierliche Arbeiten zwischen dem Einmischen des Recyclats und der Weiterverarbeitung des Mischprodukts nur eine sehr kurze Zeitspanne gegeben ist, so daß Viskositätsänderungen nahezu ausgeschlossen sind.

Weitere bevorzugte Ausgestaltungen des Verfahrens sehen vor, daß die Recyclat-Harz-Masse anschließend bahnförmig ausgebracht wird, daß die Harzpaste vor dem Vermischen mit dem GFK-Recyclat mit Eindickmittel versehen wird, wobei insbesondere die Recyclat-Harz-Masse auf einer Trägerfolie aufgebracht wird. In weiterer Ausbildung kann vorgesehen sein, daß vor dem Aufbringen der Recyclat-Harz-Masse auf die Trägerfolie frische geschnittene Glasfasern aufgestreut werden und/oder daß nach dem Aufbringen der Recyclat-Harz-Masse auf die Trägerfolie frische geschnittene Glasfasern aufgestreut werden. Weitere Ausbildungen sehen vor, daß vor dem Aufbringen der Recyclat-Harz-Masse auf die Trägerfolie streufähiges Recyclat aufgestreut wird und daß nach dem Aufbringen der Recyclat-Harz-Masse auf die Trägerfolie streufähiges Recyclat aufgestreut wird.

Durch diese letztgenannten bevorzugten Ausgestaltungen kann der Aufbau der SMC-Matte (Prepreg) in gewünschter unterschiedlicher Weise gesteuert werden. Es kann erreicht werden, daß beispielsweise der Mittelteil der Harzmatte vor allem aus Paste besteht, während die Feststoffe, Recyclat und/oder Fasern insbesondere in den außenliegenden Bereichen der Matte zentriert sind. Es können aber auch andere Aufbauten gewählt werden.

Die oben genannte Vorrichtung ist in bevorzugter Weise dadurch weitergebildet, daß in axialer Richtung (entlang Achse A) aufeinanderfolgende Ausschnitte angular zueinander versetzt angeordnet sind, wobei insbesondere axial aufeinanderfolgende Ausschnitte um 90° zueinander versetzt angeordnet sind. Hierdurch wird ein Teil der Feststoff-Harz-Masse bei der Drehbewegung der Schnecke durch die Durchbrüche oder Ausschnitte Schneckengänge wieder zurückgedrückt und zurückbewegt, so daß eine optimale Durchmischung erreicht wird. Um diesen zurückgedrückten Teil wieder Zuverlässig in die Schnecke zu fördern, ist in weiterer Ausgestaltung vorgesehen, daß der erste Schneckengang auf seiner Ober- bzw. Rückseite mit sich in einer Radialebene zur Antriebsachse der Schnecke erstreckenden Abschnitt versehen ist, über dem ein stationärer Abstreifer angeordnet ist.

Während die Steigung der Schneckengänge in unterschiedlicher geeigneter Weise - insbesondere mit ungleicher Steigung - gewählt werden kann, ist in bevorzugter Ausgestaltung vorgesehen, daß die Schneckengänge in den verschiedenen Abschnitten gleiche Steigung aufweisen. Hierdurch wird ein kontinuierlicher Materialfluß von dem erweiterten ersten Abschnitt der Schnecke, Eintragsteil, in den verhängten Austragsabschnitt bewirkt, da der im erweiterten Teil gegebene Vorwärtsmaterialfluß größer ist als der im engeren Austragsteil, wodurch sich gerade ein rückläufiger Materialfluß ergibt.

Zur Regelung der Anlagen und insbesondere zur Steuerung und Einstellung der Parameter des Mischguts können Sonden vorgesehen sein. So sieht eine bevorzugte Ausgestaltung vor, daß die Mischvorrichtung in ihrem oberen Bereich eine Niveausonde aufweist. Weitere bevorzugte Ausgestaltungen zeichnen sich dadurch aus, daß die Mischvorrichtung einen Drucksensor aufweist und daß die Mischvorrichtung eine Temperatursonde aufweist. Die Drucksonde kann zur Regelung der Antriebsgeschwindigkeit der Schnecke eingesetzt werden, während die Temperatursonde auf in der Mischvorrichtung gegebenenfalls vorhandene Heizkörper oder auch Kühleinrichtungen wirken kann.

Der Austrag vom Auslaß der Mischvorrichtung erfolgt in äußerst bevorzugter Ausgestaltung dadurch, daß die in der Mischvorrichtung hergestellte Recyclat-Harz-Masse durch eine Exzenterschneckenpumpe, insbesondere Mohnopumpe, ausgetragen wird, wobei am Auslaß der Pumpe ein Drucksensor angeordnet ist. Über den Drucksensor kann die Viskosität festgestellt werden und dann über die Steuerung der Zugabe von Eindickmitteln etc. die Viskosität geregelt werden.

Während die Weiterverarbeitung der derart hergestellten Masse zu Bahnen oder Matten, vorzugsweise in der weiter unten beschriebenen Art und Weise erfolgt, kann die Masse auch grundsätzlich mittels anderer an sich bekannter Verfahren weiterverarbeitet werden. So kann vorgesehen sein, die Masse als solche und damit als in aufgeheizte Premix-Preßmasse bzw. Bulk Moulding Compounds (BMC) in aufgeheizte (Preß-)Formen zur Herstellung der gewünschten Formgegenstände eingegeben werden. Weiterhin kann die Masse im Spritzgieß- oder Prägeverfahren (ZMC) verarbeitet werden. Die Masse kann zu auf einen Kern aufwickelnden Roosingsträngen zugegeben werden und so faserverstärkte Rohre oder dergleichen herstellen (Wickelverfahren). Sie kann gemeinsam mit Fasern (Rozenig) wie eine Wellform gespritzt werden (Schleuderverfahren). Sie kann gegebenenfalls nach Mischen mit weiteren Fasern durch ein geheiztes Werkzeug gezogen werden, in dem die Formgebung erfolgt (Pultrusionsverfahren). Eine Imprägnierung von Rohfasern kann auch durch kontinuierliche Imprägnierung durch Aufgabe zwischen zwei Walzen erfolgen (LIC-Verfahren), wobei die Aufbringung durch Ratzeln oder auch in der im folgenden beschriebenen Weise erfolgen kann. Auch können zur Weiterverarbeitung andere Verfahren, wie Handbannimieren, Niederdruck- und Injektionsverfahren, verwendet werden.

Grundsätzlich unabhängig von der vorstehend beschriebenen Mischvorrichtung, in äußerst bevorzugter Ausgestaltung aber zusammen mit dieser ist eine Vorrichtung vorgesehen, bei der durch mindestens eine Breitschlitzdüse zum bahn- oder lagenförmigen Ausbringen von faserverstärktem SMC-Material. Diese sieht in bevorzugter Weiterbildung vor, daß jede Breitschlitzdüse mit mindestens zwei Einlässen von entsprechenden Mischvorrichtungen nach einem der Ansprüche 8 bis 18 her versehen ist. Bei einer Düse von 200-500 mm Breite wird man zwei Einlässe und bei einer Düse von 500-700 mm Breite vorzugsweise drei Einlässe wählen.

In anderer Ausgestaltung kann vorgesehen sein, daß Breitschlitzdüsen vorgesehen sind, die quer zur Abzugsrichtung des Materials chargieren, d.h. sich über die Bahn hin- und herbewegen.

Weitere Ausgestaltungen, insbesondere zur Durchführung der entsprechenden Schritte sehen vor, daß vor der oder den Breitschlitzdüsen ein Glasfaserschneidwerk zum Ausbringen frischer geschnittener Glasfasern auf eine Trägerfolie für die durch die Breitschlitzdüsen ausgebrachte SMC-Matte angeordnet ist und/oder daß stromab der Breitschlitzdüsen Faserschneidwerke zum Ausbringen frischer geschnittener Fasern auf die Oberfläche der ausgebrachten SMC-Matte angeordnet sind sowie gegebenenfalls daß vor den Breitschlitzdüsen Recyclatstreuer zum Ausstreuen streufähigen GFK-Recyclats auf eine Trägerfolie für die mittels der Breitschlitzdüsen ausgebrachte SMC-Matte angeordnet sind und/oder daß stromab der Breitschlitzdüsen Recyclatstreuer zum Ausbringen streufähigen GFK-Recyclats auf die durch die Breitschlitzdüsen ausgebrachte SMC-Matte angeordnet sind.

Das Glattwalzen der durch die Breitschlitzdüsen ausgebrachten Feststoff-Harz-Matte kann dadurch geschehen, daß weiterhin vorgesehen ist, daß stromab der Breitschlitzdüsen und gegebenenfalls vorhandener Streu- bzw. Schneidwerke Walzen zum Glattwalzen der mittels Breitschlitzdüsen ausgebrachten Harzpaste angeordnet sind, wobei entweder die Walzen als Umlenkwalze für eine Deckfolie für die ausgebrachte Harzmatte ausgebildet sind oder die Walzen als schräg zur Laufrichtung der Harzmatte ausgerichtete Walzen angeordnet sind.

Insgesamt wird durch die Erfindung ein Verfahren und eine Vorrichtung geschaffen, bei denen, insbesondere wenn an den Mischvorgang sogleich das mattenförmige Ausbringen des Mischgutes erfolgt bzw. der Mischvorrichtung sich die Ausbringeinrichtung mit Breitschlitzdüsen unmittelbar anschließt, eine hohe Parameterkonstanz des Mischgutes erreicht wird.

Während die übliche Schichtung von SMC-Platten aus einem Sandwichaufbau mit einer mittleren Glasfaserschicht und beidseitig derselben vorgesehener Harzpastenschichten ohne Faseranteil war, wobei die Harzpaste von außen mehr oder weniger in die Faserschicht eindringt, ermöglicht, die Erfindung je nach Einsatzzweck einen unterschiedlichen Schichtaufbau. Auf einer Glasfaser-Grundschicht kann eine mit Recyclat versehene Harzpastenschicht aufgebracht sein. Die Glasfaserschicht kann einseitig mit einer Schicht recyclat-freier Harzpaste und auf der anderen Seite mit einer Schicht von Recyclat-Harzpaste versehen sein, wobei je nachdem, ob eine glatte oder strukturierte Schicht als Sichtseite gewünscht ist, die eine oder andere Seite als solche genommen werden kann. Es können Schichtungen in unterschiedlicher Weise aus reinen (Frisch-)Glasfasern, trockenem Faserrecyclat und Harzpaste mit und ohne Recyclat vorgesehen sein. Auch können leitfähige Schichten durch Kohlefasern vorgesehen werden.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigt:
- Figur 1: eine schematische Darstellung einer bevorzugten Ausführungsform einer erfindungsgemäßen Vorrichtung zur Erzeugung einer glasfaserverstärkten Bearbeitungsmasse;
- Figur 2: eine Sicht auf die Gänge der Mischerschnecke in zwei verschiedenen Ebenen;
- Figur 3: eine schematische Darstellung in Seitenansicht einer erfindungsgemäßen Vorrichtung zur Herstellung einer SMC-Harz-Matte (Prepreg);
- Figur 4: eine Draufsicht auf wesentliche Teile der Vorrichtung der Figur 3; und
- Figur 5: mögliche Schichtaufbauten erfindungsgemäß hergestellter Matten.

Die erfindungsgemäße Vorrichtung 1 zur Herstellung einer glasfaserverstärkten Harzmasse weist in der dargestellten Ausführungsform ein Wechselmagazin 2 auf, in welchem zerkleinertes GFK-Recyclat (über 3) aus Säcken (Big Bags) eingebracht wird. An das Wechselmagazin 2 schließt sich eine Dosieranlage mit einer Differentialwaage an, über welches das Recyclat einer Mischvorrichtung 6 zugeführt wird. Derart können die Unterbrechungszeiten für die Differentialwaage so gering wie möglich gehalten werden, indem mittels des Wechselmagazins innerhalb von Sekunden ein leerer Vorratsbehälter gegen einen vollen getauscht werden kann. Die Differentialwaage ermöglicht eine stufenlose Einstellung der Gewichtsdosierung des Recyclats in die Mischvorrichtung 6. Der Austrag des Recyclats zur Mischvorrichtung 6 kann mit einer oder zwei Schnecken oder aber mit Förderbändern erfolgen. Es hat sich gezeigt, daß die Wahl der Zahl der Austragsschnecken von der geforderten Austragsmenge abhängig ist. Der Austrag des Recyclats erfolgt in einem Mischbehälter 12 mit einem konischen Hauptabschnitt und einem zylindrischen Ansatz.

Die Mischvorrichtung 6 weist neben dem Recyclateinlaß 4a einen weiteren Einlaß 10a für die Harzpaste auf. Diese selbst wird über einen Statikmischer zugeführt, in dem Harzpaste und Eindickungsmittel zunächst vorvermischt werden.

Die Mischvorrichtung 6 weist zum Mischen eine Mischschnecke 7 mit strahlender Welle A auf, die einen ersten Abschnitt 8 relativ großen Durchmessers, einen sich anschließenden mittleren Abschnitt 9 mit konischer Außenkontur und einen sich hieran anschließenden Austragsabschnitt 11 mit gegenüber dem ersten Abschnitt geringerem Durchmesser aufweist. Die Schnecke 7 ist durch den entsprechend gestalteten Mischbehälter 12 umgeben. Die Schnecke 7 steht mit ihrer Achse vertikal, wobei der Abschnitt geringen Durchmessers an der Unterseite angebracht ist. Die Schnecke 7 wird über einen Motor 15 angetrieben, der mit einem Gestell 13 höhenveränderlich ist, so daß die Schnecke 7 zur Reinigung aus dem Behälter 12 ausgefahren werden kann.

Damit durch die Reibung der Schnecke am Mischgut dieses nicht in Drehbewegung versetzt wird, ist an der Wand des Behälters 12 eine vertikal verlaufende Schikane 20 angebracht, die der Drehbewegung des Mischguts Widerstand entgegensetzt.

Die Rück- oder Oberseite 14 des ersten Schneckenganges 16 ist horizontal bzw. senkrecht zur Welle A ausgerichtet. Einseitig befindet sich über ihr ein Abstreifer 17, so daß rückgefördertes Material von der Oberseite 14 abgestreift wird. Hierdurch wird ein Verkleben des oberen Schneckenganges durch den Eintrag von flüssiger Harzpaste und trockenem Recyclat verhindert.

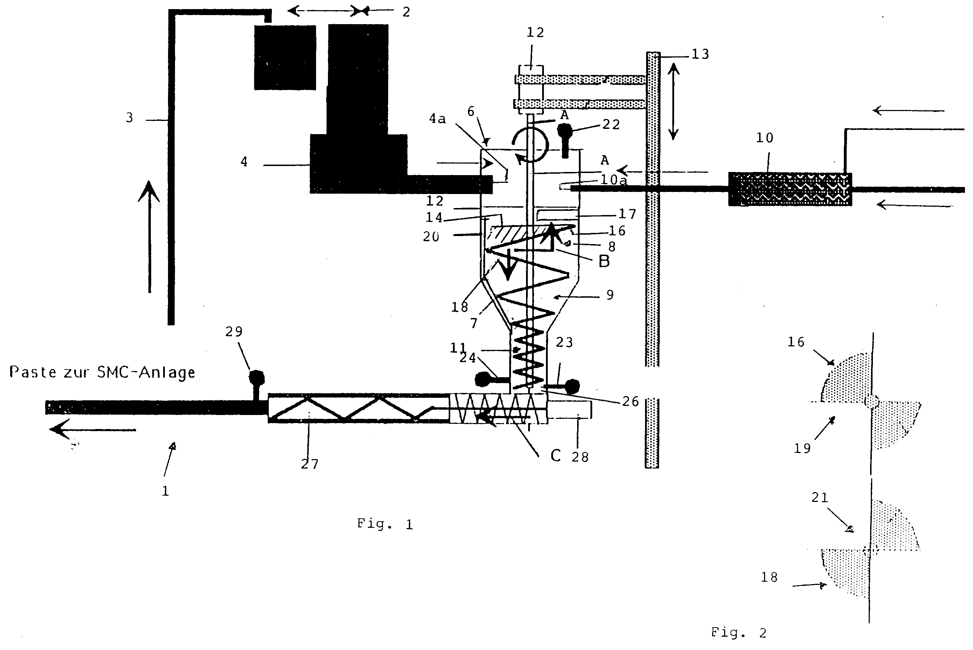

Zumindestens ein Teil der Schneckengänge 16, 18 etc., insbesondere im ersten Abschnitt 8 relativ großen Durchmessers sind mit Ausschnitten 19, 21 versehen, wobei die Ausschnitte zwei aufeinanderfolgender Schneckengänge relativ zueinander in radialer Richtung versetzt sind, wie dies für die Schneckengänge 16, 18 in Figur 2 dargestellt ist, wo ein Versatz um 90° zueinander erkennbar ist. Hierdurch wird ein teilweises Rückfördern der in die Mischvorrichtung 6 eingebrachten Masse und damit eine innige Durchmischung von Recyclat und zugeführter Harzpaste ermöglicht. Die Umdrehungszahl der Mischschnecke 7 wird so eingestellt, daß die Förderleistung nach unten wesentlich größer ist als der Bedarf des Gemisches für den Austrag zur Weiterverarbeitung. Dadurch strömt die Masse zum Teil in den Schneckenkreisausschnitten 19, 21 wieder zurück nach oben und es entsteht ein intensiver Förder- und Mischvorgang. Es hat sich gezeigt, daß eine intensive Vermischung und Benetzung des Recyclats sowohl bei feinpulverigen und grobkörnigen Recyclaten als auch bei durch verfilzte Glasfasern wolligen Strukturen erreicht wird. Die Umdrehungszahl der Mischschnecke ist vorzugsweise stufenlos einstellbar, damit der Mischvorgang in gewünschter Weise eingestellt werden kann.

Die Mischvorrichtung 6 kann, wie dies dargestellt ist, mit Sensoren versehen sein, wie einer Niveausonde 22, einem oberen Bereich des Gehäuses 12, die bei Überfüllung des Behälters 12 das Zuführsystem abschaltet, weiter sind Druck- und Temperatursensoren 23, 24 im unteren Bereich des Mischergehäuses 12, insbesondere im Auslaßbereich 26 desselben, vorgesehen, um hier die Parameter des Mischgutes im Hinblick auf die Weiterverarbeitung festzustellen. Eine Druckregelung kann über die Regelung der Antriebsgeschwindigkeit der Mischerwelle (Achse A) erfolgen, während eine Temperaturregelung durch geeignete Heizeinrichtungen (nicht dargestellt), insbesondere in der Mischvorrichtung, aber auch in dieser vorgeordneten Teilen der Vorrichtung erfolgen kann.

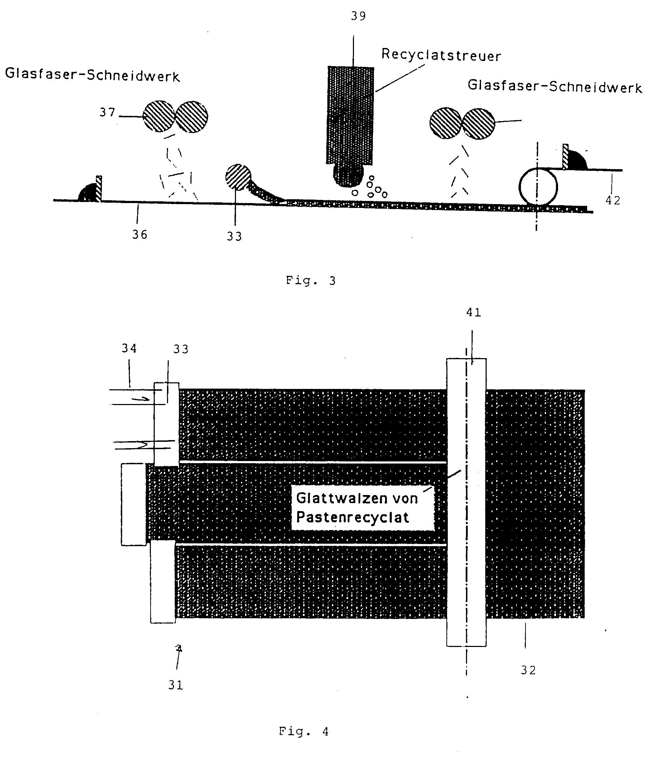

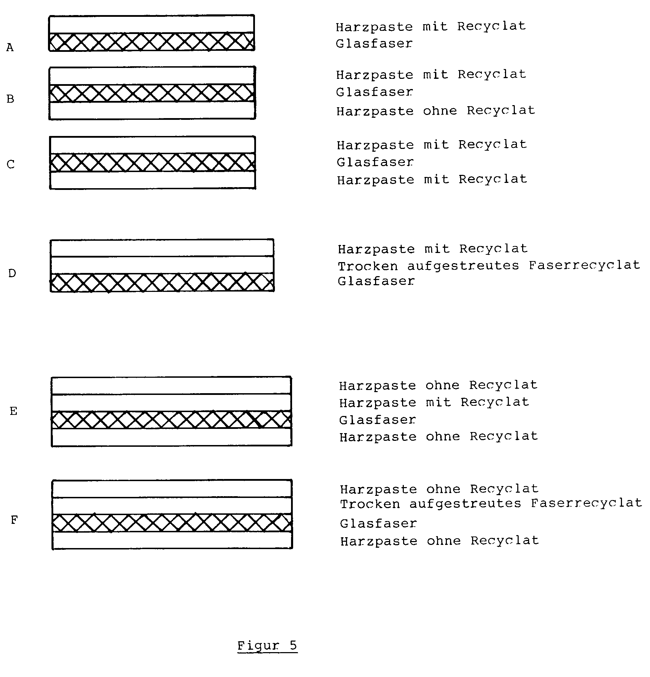

Über den Auslaß 26 der Mischvorrichtung 6 gelangt die Harz-Recyclat-Paste in eine Exzenterschneckenpumpe 27 mit einem Antrieb 28, die das Mischgut zur Weiterverarbeitung fördert. Am Auslaß der Pumpe 27 kann ein weiterer Drucksensor 29 vorgesehen sein. Von der Exzenterschneckenpumpe 27 gelangt die Masse zur Weiterverarbeitung, beispielsweise in einer SMC-Anlage, wie sie im folgenden unter Bezugnahme auf die Figuren 3 und 4 beschrieben ist.

Eine typische Vorrichtung 31 zur Herstellung einer SMC-Matte (Prepreg) 32 weist in der dargestellten Ausführungsform drei nebeneinander angeordnete Breitschlitzdüsen 33 auf, die vorzugsweise jeweils mit zwei Einlässen 34 von entsprechenden Vorrichtungen zur Herstellung der SMC-Paste 1 bzw. deren Exzenterschneckenpumpen 27 her versehen sind, damit die Breitschlitzdüse 33 einen gleichmäßigen SMC-Pastenaustrag bewirkt. Alternativ kann der Austrag auch über Rakelkästen erfolgen.

Um eine gleichmäßige Verteilung der Pastenströme in mehrere Breitschlitzdüsen zu erhalten, kann es zweckmäßig sein, mehrere Monopumpen nebeneinander zu betreiben. Je eine oder zwei Monopumpen für eine Breitschlitzdüse, damit der Pastenstrom exakt reguliert werden kann.

Die SMC-Masse wird durch die Breitschlitzdüsen 33 auf eine Trägerfolie 36 aufgebracht.

Die Vorrichtung 31 kann weiterhin Glasfaserschneidwerke 37, 38 aufweisen, mit denen frische geschnittene Glasfasern vor und/oder nach dem Aufbringen der SMC-Masse auf die Trägerfolie 36 aufgestreut werden. Es kann weiterhin ein Recyclatstreuer 39 vorgesehen sein, mit dem ebenfalls GFK-Recyclat direkt auf die Trägerfolie 36 und/oder auf die aufgebrachte SMC-Masse aufgestreut wird. Nach diesen Streueinrichtungen 37 bis 39 ist eine Walze 41 zum Glattwalzen der auf die Trägerfolie 36 aufgebrachten SMC-Matte vorgesehen, über die eine weitere Folie, nämlich eine Deckfolie 42, auf die SMC-Matte 32 (und das auf diese aufgestreute Streugut) aufgelegt wird. Die Matte 32 wird dann zur weiteren Verarbeitung einer nicht dargestellten Presse zugeführt.

Figur 5 zeigt verschiedene, bevorzugte Schichtaufbauten erfindungsgemäßer Matten.

## Patentansprüche

1. Verfahren zum Herstellen einer duroplastischen Preßmasse aus Faser-Harz-Werkstoff, wie insbesondere von SMC-Matten (Prepregs), Premix-Preßmassen (BMC), Spritzgießmassen (ZMC), kontinuierlich imprägnierten Compounds (LIC) oder dergleichen, wobei Harzpaste und Eindickungsmittel vorvermischt werden, streufähiges GFK-Recyclat auf der Basis von vernetztem faserverstärktem duroplastischem Kunststoff kontinuierlich in einen Schneckenmischer eingebracht wird, dort mit der vorverdickten Harzpaste innig durchmischt wird, indem die eingebrachte Recyclat-Harz-Masse teilweise im Schneckenmischer zurückgefördert wird und wobei die Recyclat-Harz-Masse anschließend bahnförmig ausgebracht wird.

2. Verfahren nach Anspruch 1, dadurch gekennzeichnet, daß die Recyclat-Harz-Masse auf einer Trägerfolie aufgebracht wird.

3. Verfahren nach Anspruch 2, dadurch gekennzeichnet, daß vor dem Aufbringen der Recyclat-Harz-Masse auf die Trägerfolie frische geschnittene Glasfasern aufgestreut werden.

4. Verfahren nach Anspruch 2 oder 3, dadurch gekennzeichnet, daß nach dem Aufbringen der Recyclat-Harz-Masse auf die Trägerfolie frische geschnittene Glasfasern aufgestreut werden.

5. Verfahren nach einem der Ansprüche 2 bis 4, dadurch gekennzeichnet, daß vor dem Aufbringen der Recyclat-Harz-Masse auf die Trägerfolie streufähiges Recyclat aufgestreut wird.

6. Verfahren nach einem der Ansprüche 2 bis 5, dadurch gekennzeichnet, daß nach dem Aufbringen der Recyclat-Harz-Masse auf die Trägerfolie streufähiges Recyclat aufgestreut wird.

7. Vorrichtung zum Herstellen einer duroplastischen Preßmasse aus Glasfaser-Harz-Werkstoff, wie insbesondere von SMC-Matten, Premix-Preßmassen (BMC), Spritzgießmassen (ZMC), kontinuierlich imprägnierten Compounds (LIC) oder dergleichen, mit einer Mischvorrichtung zum Mischen rieselfähigen Verstärkungsmaterials in einer Harzpaste, mit nur einer vertikalen Schnecke (7) mit einem ersten Abschnitt (8) relativ großen Durchmessers bei einem mittleren konischen Abschnitt (9) und einem Austragsabschnitt (11) geringen Durchmessers sowie in den Schneckengängen (16, 18) ausgebildeten Ausschnitten (19, 21).

8. Vorrichtung nach Anspruch 7, dadurch gekennzeichnet, daß in axialer Richtung (entlang Achse A) aufeinanderfolgende Ausschnitte (19, 21) angular zueinander versetzt angeordnet sind.

9. Vorrichtung nach Anspruch 8, dadurch gekennzeichnet, daß axial aufeinanderfolgende Ausschnitte um 90° zueinander versetzt angeordnet sind.

10. Vorrichtung nach einem der Ansprüche 7 bis 9, dadurch gekennzeichnet, daß die Schneckengänge in den verschiedenen Abschnitten (8, 9, 11) gleiche Steigung aufweisen.

11. Vorrichtung nach einem der Ansprüche 7 bis 10, dadurch gekennzeichnet, daß die Mischvorrichtung (6) Sonden zum Regeln bzw. Einstellen von Materialparametern aufweist.

12. Vorrichtung nach einem der Ansprüche 7 bis 11, dadurch gekennzeichnet, daß die Mischvorrichtung (6) in ihrem oberen Bereich eine Niveausonde (22) aufweist.

13. Vorrichtung nach Anspruch 11 oder 12, dadurch gekennzeichnet, daß die Mischvorrichtung (6) einen Drucksensor (23) aufweist.

14. Vorrichtung nach einem der Ansprüche 11 bis 13, dadurch gekennzeichnet, daß die Mischvorrichtung (6) eine Temperatursonde (24) aufweist.

15. Vorrichtung nach einem der Ansprüche 7 bis 14, dadurch gekennzeichnet, daß der erste Schneckengang auf seiner Ober- bzw. Rückseite mit sich in einer Radialebene zur Antriebsachse (A) der Schnecke (7) erstreckenden Abschnitt versehen ist, über dem ein stationärer Abstreifer (17) angeordnet ist.

16. Vorrichtung nach einem der Ansprüche 7 bis 15, dadurch gekennzeichnet, daß die in der Mischvorrichtung (6) hergestellte Recyclat-Harz-Masse durch eine Exzenterschneckenpumpe (Mohnopumpe) (27) ausgetragen wird.

17. Vorrichtung nach Anspruch 16, dadurch gekennzeichnet, daß am Auslaß der Exzenterschneckenpumpe (27) ein Drucksensor (29) angeordnet ist.

18. Vorrichtung insbesondere nach einem der Ansprüche 7 bis 17, gekennzeichnet durch mindestens eine Breitschlitzdüse (33) zum bahn- oder lagenförmigen Ausbringen von faserverstärktem SMC-Material.

19. Vorrichtung nach Anspruch 18, dadurch gekennzeichnet, daß jede Breitschlitzdüse (33) mit mindestens zwei Einlässen (34) versehen ist, die mit Auslässen entsprechender Mischvorrichtungen nach einem der Ansprüche 7 bis 17 verbunden sind.

20. Vorrichtung nach Anspruch 18 oder 19, dadurch gekennzeichnet, daß vor der oder den Breitschlitzdüsen (33) ein Glasfaserschneidwerk zum Ausbringen frischer geschnittener Glasfasern auf eine Trägerfolie (36) für die durch die Breitschlitzdüsen (33) ausgebrachte SMC-Matte angeordnet ist.

21. Vorrichtung nach einem der Ansprüche 18 bis 20, dadurch gekennzeichnet, daß stromab der Breitschlitzdüsen (33) Faserschneidwerke zum Ausbringen frischer geschnittener Fasern auf die Oberfläche der ausgebrachten SMC-Matte angeordnet sind.

22. Vorrichtung nach einem der Ansprüche 18 bis 21, dadurch gekennzeichnet, daß vor den Breitschlitzdüsen (33) Recyclatstreuer (39) zum Ausstreuen streufähigen GFK-Recyclats auf eine Trägerfolie (36) für die mittels der Breitschlitzdüsen (33) ausgebrachte SMC-Matte angeordnet sind.

23. Vorrichtung nach einem der Ansprüche 18 bis 22, dadurch gekennzeichnet, daß stromab der Breitschlitzdüsen (33) Recyclatstreuer (39) zum Ausbringen streufähigen GFK-Recyclats auf die durch die Breitschlitzdüsen (33) ausgebrachte SMC-Matte angeordnet sind.

24. Vorrichtung nach einem der Ansprüche 18 bis 23, dadurch gekennzeichnet, daß stromab der Breitschlitzdüsen (33) und gegebenenfalls vorhandener Streu- bzw. Schneidwerke Walzen (41) zum Glattwalzen der mittels Breitschlitzdüsen (33) ausgebrachten Harzmatte angeordnet sind.

25. Vorrichtung nach Anspruch 24, dadurch gekennzeichnet, daß die Walzen als schräg zur Laufrichtung der Harzmatte (32) ausgerichtete Walzen angeordnet sind.

26. Vorrichtung nach Anspruch 24, dadurch gekennzeichnet, daß die Walzen (41) als Umlenkwalze für eine Deckfolie (42) für die ausgebrachte Harzmatte ausgebildet sind.

## Claims

1. Process for the production of a thermosetting moulding compound of fibre-resin material, such as in particular SMC mats (prepregs), bulk moulding compounds (BMC), injection moulding compounds (IMC), continuously impregnated compounds (CIC) or the like, in which the resin paste and thickener are premixed, strewable GRP recyclate based on crosslinked, fibre-reinforced, thermosetting plastic is continuously introduced into a screw mixer, where it is intimately mixed with the prethickened resin paste, in that the introduced recyclate-resin material is partly conveyed back into the screw mixer and in which the reyclate-resin material is subsequently discharged in web-like manner.

2. Process according to claim 1, characterized in that the reyclate-resin material is applied to a carrier sheet.

3. Process according to claim 2, characterized in that prior to the application of the recyclate-resin material to the carrier sheet, freshly cut glass fibres are strewn on.

4. Process according to claim 2 or 3, characterized in that following the application of the recyclate-resin material to the carrier sheet, fresly cut glass fibres are strewn on.

5. Process according to one of the claims 2 to 4, characterized in that prior to the application of the recyclate-resin material to the carrier sheet, strewable recyclate is strewn on.

6. Process according to one of the claims 2 to 5, characterized in that following the application of the recyclate-resin material to the carrier sheet, strewable recyclate is strewn on.

7. Apparatus for producing a thermosetting moulding compound of glass fibre-resin material, such as in particular prepregs, bulk moulding compounds (BMC), injection moulding compounds (IMC), continuously impregnated compounds (CIC) or the like with a mixer for mixing free-flowing reinforcing agent in a resin paste, with only one vertical screw (7) having a first, relatively large diameter section (8), a central, conical section (9) and a small diameter, discharge section (11), as well as cutouts (19, 21) formed in the screw channel (16, 18).

8. Apparatus according to claim 7, characterized in that successive cutouts (19, 21) are mutually annually displaced in the axial direction (along axis A).

9. Apparatus according to claim 8, characterized in that axially succeeding cutouts are mutually displaced by 90°.

10. Apparatus according to one of the claims 7 to 9, characterized in that the screw channels in the different sections (8, 9, 11) have the same pitch.

11. Apparatus according to one of the claims 7 to 10, characterized in that the mixer (6) has probes for regulating or setting material parameters.

12. Apparatus according to one of the claims 7 to 11, characterized in that in its upper area the mixer (6) has a level probe (22).

13. Apparatus according to claim 11 or 12, characterized in that the mixer (6) has a pressure sensor (23).

14. Apparatus according to one of the claims 11 to 13, characterized in that the mixer (6) has a temperature probe (24).

15. Apparatus according to one of the claims 7 to 14, characterized in that the first screw channel is provided on its top or back with a section extending in a radial plane to the drive axis (A) of the screw (7) and over which is positioned a stationary stripper (17).

16. Apparatus according to one of the claims 7 to 15, characterized in that the recyclate-resin material produced in the mixer (6) is discharged by an eccentric screw pump (Mohno pump) (27).

17. Apparatus according to claim 16, characterized in that a pressure sensor (29) is located at the outlet of the eccentric screw pump (27).

18. Apparatus, particularly according to one of the claims 7 to 17, characterized by at least one slot die (33) for the discharge of the fibre-reinforced prepreg in web or layer form.

19. Apparatus according to claim 18, characterized in that each slot die (33) is provided with at least two inlets (34), which are connected to outlets of corresponding mixers according to one of the claims 7 to 17.

20. Apparatus according to claim 18 or 19, characterized in that upstream of the slot die or dies (33) is provided a glass cutter unit for the discharge of freshly cut glass fibres onto a carrier sheet (36) for the prepreg discharged through the slot dies (33).

21. Apparatus according to one of the claims 18 to 20, characterized in that downstream of the slot dies (33) are provided fibre cutting units for the discharge of freshly cut fibres onto the surface of the discharged prepreg.

22. Apparatus according to one of the claims 18 to 21, characterized in that upstream of the slot dies (33) are provided recyclate strewing units (39) for strewing strewable GRP recyclate on a carrier sheet (36) for the prepreg discharged by means of the slot dies (33).

23. Apparatus according to one of the claims 18 to 22, characterized in that downstream of the slot dies (33) are provided recyclate strewing units (39) for the discharge of strewable GRP recyclate onto the prepreg discharged through the slot dies (33).

24. Apparatus according to one of the claims 18 to 23, characterized in that downstream of the slot dies (33) and optionally any strewing or cutting units, rollers (41) are provided for rolling smooth the resin mat discharged by means of the slot dies (33).

25. Apparatus according to claim 24, characterized in that the rollers are inclined to the running direction of the resin mat (32).

26. Apparatus according to claim 24, characterized in that the rollers (41) are constructed as guide rollers for a cover sheet (42) for the discharged resin mat.

## Revendications

1. Procédé pour la préparation d'une matière à mouler thermodurcissable à partir de matériau en fibre-résine en particulier à partir de tapis SMC (imprégnés), de prémélangés à mouler (SMC), de composés de moulage par injection (ZMC), de composés imprégnés en continu (LIC) ou de composés semblables, dans lequel une pâte de résine et un agent épaississant sont préalablement mélangés, dans lequel on alimente en continu un mélangeur à vis par un recyclat GFK dispersable obtenu à partir d'une matière thermodurcissable réticulée et renforcée de fibres de verre, on y réalise un mélange intime avec la pâte de résine préalablement épaissie, procédé dans lequel la masse de recyclat-résine apportée est partiellement renvoyée par le mélangeur à vis et dans lequel la masse de recyclat-résine est ensuite évacuée sous forme de bande.

2. Procédé selon la revendication 1 caractérisé en ce que la masse de recyclat-résine est déposée sur un film-support.

3. Procédé selon la revendication 2 caractérisé en ce qu'avant le dépôt de la masse de recyclat-résine sur le film-support, on y répand des fibres de verre fraîchement découpées.

4. Procédé selon les revendications 2 ou 3 caractérisé en ce qu'après le dépôt de la masse de recyclat-résine sur le film-support, on y répand des fibres de verre fraîchement découpées.

5. Procédé selon l'une des revendications 2 à 4 caractérisé en ce que l'on répand du recyclat dispersable avant le dépôt de la masse de recyclat-résine sur le film-support.

6. Procédé selon l'une des revendications 2 à 5 caractérisé en ce que l'on répand du recyclat dispersable après le dépôt de la masse de recyclat-résine sur le film-support.

7. Installation pour la préparation d'une matière moulable thermodurcissable à partir d'un matériau de fibres de verre et de résine, en particulier à partir de tapis SMC (imprégnés), de prémélangés à mouler (SMC), de composés de moulage par injection (ZMC), de composés imprégnés en continu (LIC) ou de composés semblables, installation comprenant un mélangeur pour le mélange dans une pâte de résine de matières déversables de renforcement avec une seule vis sans fin verticale (7) comportant un premier tronçon (8) à relativement grand diamètre, un tronçon intermédiaire conique (9) et un tronçon de sortie (11) à faible diamètre ainsi que des filets (16,18) présentant des évidements (19,21).

8. Installation selon la revendication 7 caractérisée en ce que les évidements (19,21) successifs dans la direction axiale (le long de l'axe A) sont décalés angulairement l'un par rapport à l'autre.

9. Installation selon la revendication 8 caractérisée en ce que les évidements successifs dans la direction axiale sont décalés angulairement l'un par rapport à l'autre de 90°.

10. Installation selon l'une des revendications 7 à 9 caractérisée en ce que dans les différents tronçons (8, 9, et 11) les filets de la vis sans fin présentent des sauts identiques.

11. Installation selon l'une des revendications 7 à 10 caractérisée en ce que le mélangeur (6) présente des sondes pour le réglage ou l'introduction de paramètres relatifs au matériau.

12. Installation selon l'une des revendications 7 à 11 caractérisée en ce que le mélangeur (6) présente dans sa partie supérieure un détecteur de niveau (22).

13. Installation selon la revendication 11 ou 12 caractérisée en ce que le mélangeur (6) comporte un barocapteur (23).

14. Installation selon l'une des revendications 11 à 13 caractérisée en ce que le mélangeur comporte une sonde thermique (24).

15. Installation selon l'une des revendications 7 à 14 caractérisée en ce que le premier filet présente sur sa face supérieure ou arrière une partie s'étendant dans un plan radial à l'axe d'entraînement (A) de la vis (7), au-dessus de laquelle est monté un racleur (17) stationnaire.

16. Installation selon l'une des revendications 7 à 15 caractérisée en ce que la masse de résine-recyclat produite dans le mélangeur (6) est extraite par une pompe à excentrique (27) (pompe du type MOHNO).

17. Installation selon la revendication 16 caractérisée en ce que la sortie de la pompe à excentrique (27) comporte un barocapteur (29).

18. Installation en particulier selon l'une des revendications 7 à 17 caractérisée par au moins une filière plate (33) pour l'évacuation en bande ou en couche de matériau SMC renforcé par des fibres.

19. Installation selon la revendication 18 caractérisée en ce que chaque filière plate (33) présente au moins deux entrées (34) reliées à des sorties des mélangeurs correspondants selon l'une des revendications 7 à 17.

20. Installation selon la revendication 18 ou 19 caractérisée en ce que devant la ou les filière(s) plate(s) (33) est monté un outil de découpe des fibres de verre pour épandre des fibres de verre fraîchement découpées sur un film-support (36) pour le tapis de SMC sortant des filières plates (33).

21. Installation selon l'une des revendications 18 à 20 caractérisée en ce qu'en aval des filières plates (33) est prévu un outil de découpe des fibres pour l'épandage de fibres fraîchement découpées sur la surface du tapis de SMC évacué.

22. Installation selon l'une des revendications 18 à 21 caractérisée en ce que devant les filières plates (33) est prévu un distributeur (39) pour l'épandage des recyclats GFK dispersables sur un film-support (36) pour le tapis de SMC sortant des filières plates (33).

23. Installation selon l'une des revendications 18 à 22 caractérisée en ce qu'en aval de la filière plate (33) est prévu un distributeur (39) pour l'épandage des recyclats GFK dispersables sur le tapis de SMC sortant des filières plates (33).

24. Installation selon l'une des revendications 18 à 23 caractérisée en ce que l'on prévoit en aval des filières plates (33) et le cas échéant de l'outil de découpe ou du distributeur, des cylindres (41) destinés à laminer le tapis de résine sortant des filières plates (33).

25. Installation selon la revendication 24 caractérisée en ce que les cylindres sont installés en oblique par rapport à la direction d'avance du tapis de résine (32).

26. Installation selon la revendication 24 caractérisée en ce que les cylindres (41) sont des cylindres de renvoi pour un film de revêtement (42) du tapis de résine sortant.
